# EUROPÄISCHE PATENTANMELDUNG

(11) **EP 0 902 513 A2**
(43) Veröffentlichungstag der Anmeldung: **17.03.1999**
(21) Anmeldenummer: 98103176.8
(22) Anmeldetag: 24.02.1998
(51) Int. Cl.: H02B 1/20, H05K 7/02, H02G 3/26

(54) **Vorrichtung zur Befestigung und Verdrahtung einer Vielzahl von elektrischen Einheiten, insbesondere in einem Schaltschrank**

(30) Priorität: 10.09.1997 DE 29716229 U
(71) Anmelder: FRIEDRICH LÜTZE ELEKTRO GESELLSCHAFT MIT BESCHRÄNKTER HAFTUNG, D-71384 Weinstadt (DE)
(72) Erfinder: Hoffmann, Gerhard, 71522 Backnang (DE)
(74) Vertreter: Vetter, Hans, Dipl.-Phys. Dr.

(57) **Zusammenfassung**

Es wird eine Vorrichtung zur Befestigung und Verdrahtung einer Vielzahl von elektrischen Einheiten, insbesondere in einem Schaltschrank, vorgeschlagen. Wenigstens ein die elektrischen Einheiten an seiner Montageseite aufnehmender Montagesteg (12-15) ist an wenigstens zwei senkrecht dazu dahinter angeordneten Tragschienen (10,11) befestigbar, wobei Befestigungsmittel zum Befestigen der elektrischen Einheiten am Montagesteg (12-15) vorgesehen sind. Dieser flachleistenartige Montagesteg (12-15) besitzt an seiner der Montageseite (29) entgegengesetzten Rückseite eine sich über seine Länge erstreckende, einstückig angeformte Halterippe (28) mit einer zur Montageseite (29) hin offenen Montagenut (30), die zur Aufnahme der Köpfe (33) von Montageschrauben (34) zur Befestigung des Montagestegs (12-15) mittels der Halterippe (28) an den Tragschienen (10, 11) ausgebildet ist. Wenigstens eine der beiden entgegengesetzten Längskanten des flachleistenartigen Montagestegs (12-15) ist mit einem Verdrahtungskamm (39) versehbar. Hierdurch kann eine sehr geringe Bautiefe bei gleichzeitiger Reduzierung von Montageteilen erzielt werden, wobei der Raum hinter dem Montagesteg nahezu voll ständig als Verdrahtungsraum nutzbar ist.

## Beschreibung

Die Erfindung betrifft eine Vorrichtung zur Befestigung und Verdrahtung einer Vielzahl von elektrischen Einheiten, insbesondere in einem Schaltschrank, mit wenigstens einem die elektrischen Einheiten an seiner Montageseite aufnehmenden Montagesteg, der an wenigstens zwei senkrecht dazu dahinter angeordneten Tragschienen befestigbar ist, wobei Befestigungsmittel zum Befestigen der elektrischen Einheiten am Montagesteg vorgesehen sind.

Derartige Vorrichtungen für Schalschränke sind beispielsweise aus dem Katalog "LSC-Verdrahtungssystem" der Firma Friedrich Lütze GmbH & Co. bekannt. Die bekannten Montagestege weisen einen im wesentlichen U-förmigen Querschnitt auf und werden randseitig mittels U-förmigen Montagebügeln mit einer Rahmenkonstruktion verbunden. Durch die abgekanteten U-Schenkel der Montagestege ist der hinter diesen Montagestegen liegende Raum schwer zugänglich und steht als Verdrahtungsraum nicht zur Verfügung. Bei der entsprechend benötigen Montagetiefe treten zwar beim Einsatz in großen Schaltschränken kaum Probleme auf, jedoch werden die Schaltschränke bedingt durch immer kleiner werdende elektrische Einheiten und die fortschreitende Integration immer kleiner, so daß die Bautiefe mehr und mehr eine Rolle spielt.

Eine Aufgabe der vorliegenden Erfindung besteht daher darin, eine Vorrichtung der eingangs genannten Gattung so zu verbessern, daß zur Verwendung auch in sehr kleinen Schaltschränken eine wesentlich geringere Bautiefe realisierbar ist.

Diese Aufgabe wird erfindungsgemäß dadurch gelöst, daß der flachleistenartige Montagesteg an seiner der Montageseite entgegengesetzten Rückseite eine sich über seine Länge erstreckende, einstückig angeformte Halterippe mit einer zur Montageseite hin offenen Montagenut besitzt, daß die Montagenut zur Aufnahme der Köpfe von Montageschrauben zur Befestigung des Montagestegs mittels der Halterippe an den Tragschienen ausgebildet ist und daß wenigstens eine der beiden entgegengesetzten Längskanten des flachleistenartigen Montagestegs mit einem Verdrahtungskamm versehen ist.

Die erfindungsgemäßen Montagestege können ohne Montagebügel auf zwei Tragschienen befestigt werden, so daß nicht nur eine Verringerung der Bautiefe, sondern auch eine Reduzierung von Montageteilen erzielt wird. Durch die flachleistenartige Ausbildung des Montagestegs ohne abgekantete Bereiche bzw. Schenkel ist der Raum hinter dem Montagesteg bis auf den geringen, für die Halterippen benötigten Raum voll als Verdrahtungsraum nutzbar, was bei sehr flachen Ausführungen besonders wichtig und vorteilhaft ist. Auch der an wenigstens einer der Längskanten angeordnete Verdrahtungskamm stellt keine merkliche Beeeinträchtigung des Zugangs zu diesem Verdrahtungsraum dar. Die Montage kann einfacher und schneller erfolgen, so daß insgesamt dadurch eine wesentliche Kosteneinsparung erreicht wird. Die Montagestege können sich bis zu den Seitenwandungen des Schaltschranks erstrecken, da an den Randbereichen keine Montagehandhabungen durchzuführen sind, sondern lediglich im Bereich der nach innen versetzten Tragschienen. Deren Anordnung, also insbesondere der Abstand zwischen diesen Tragschienen, kann in weiten Grenzen beliebig gewählt werden, so daß eine unproblematische Anpassung an jeweils örtliche Gegebenheiten möglich ist.

Durch die in den Unteransprüchen aufgeführten Maßnahmen sind vorteilhafte Weiterbildungen und Verbesserungen der im Anspruch 1 angegebenen Vorrichtung möglich.

Die Halterippe ist zweckmäßigerweise im wesentlichen mittig angeordnet und besitzt vorzugsweise einen im wesentlichen U-förmigen Querschnitt. Durch die mittige Anordnung ist eine symmetrische Verteilung des zur Verfügung stehenden Verdrahtungsraums automatisch gegeben.

Beide Längskanten des Montagestegs sind in vorteilhafter Weise zum Aufstecken oder Aufrasten jeweils eines Verdrahtungskamms ausgebildet, wobei vorzugsweise beide Längskanten des Montagestegs als Steck- oder Rastaufnahmen für Verdrahtungskämme ausgebildet sind. Durch einfaches Aufstecken und Verrasten ist dadurch eine schnelle und einfache Schnappmontage möglich, wobei die Verdrahtungskämme wahlweise auch nur an einigen Montagestegen angebracht werden können und dort an beiden Längskanten oder nur an einer Längskante. Durch die einfache Schnappmontage sind auch schnelle Änderungen möglich.

Der Verdrahtungsraum kann den Erfordernissen entsprechend beliebig dadurch gewählt werden, daß Abstandsstücke zwischen der Halterippe und den Tragschienen vorgesehen sind, die Ausnehmungen für die Befestigungsschrauben besitzen. Diese Abstandsstücke können auch gleichzeitig zur Festlegung des rechten Winkels zwischen den Montagestegen und den Tragschienen dienen und verhindern eine Winkelveränderung dadurch, daß die Abstandsstücke einen im wesentlichen quadratischen Querschnitt besitzen und sowohl mittels einer nutartigen Vertiefung auf seiten der Halterippe als auch mittels einer nutartigen Vertiefung auf seiten der Tragschienen drehfest montierbar sind. Die nutartigen Vertiefungen werden zweckmäßigerweise jeweils zwischen zwei wulstartigen, sich in der Längsrichtung erstreckenden Erhebungen gebildet, und zwar sowohl an der Halterippe als auch an den Tragschienen. Dadurch wird beim Verschrauben automatisch der rechte Winkel unveränderbar fixiert.

Die Tragschienen besitzen in vorteilhafter Weise wenigstens eine zur Halterippe hin offene Montagenut, in der mit den Montageschrauben zusammenwirkende Gleitmuttern längsverschiebbar geführt sind. Hierdurch können die Montagestege durch leichtes Lösen der Montageschrauben beliebig entlang der Tragschienen verschoben und schnell und einfach in der gewünschten Position fixiert werden.

Die Tragschienen können auch zweckmäßigerweise noch zusätzlich eine weitere, zur entgegengesetzten Seite hin offene Montagenut besitzen, in der mit weiteren Montageschrauben zur Befestigung der Tragschienen an einer Schankwand oder an Haltevorrichtungen zusammenwirkende Gleitmuttern längsverschiebbar geführt sind. Vorzugsweise sind dabei zur Montage in Schaltschränken mit ohnehin vorhandenen Stehbolzen solcher Schaltschränke verbindbare Halteleisten vorgesehen, die Langlöcher zur Verbindung mit der weiteren Montagenut der Tragschienen besitzen. Auch hier ist dadurch die Position der Tragschienen in weiten Grenzen frei wählbar und durch Anziehen der weiteren Montageschrauben fixierbar. Dies gewährleistet einen variablen Einbau in Schaltschränke verschiedener Dimensionierungen.

Als Befestigungsmittel zum Befestigen der elektrischen Einheiten oder dergleichen an den Montagestegen sind in der Montagenut der Halterippe Gleitmuttern in Führungen längsverschiebbar geführt, die so beabstandet vom Boden der Montagenut angeordnet sind, daß die Köpfe der Montageschrauben außerhalb der Bewegungsbahn der Gleitmuttern angeordnet sind. Dadurch ist es möglich, beispielsweise elektrische Einheiten zu verschieben und mittels der Gleitmuttern zu positionieren, ohne daß die Köpfe der Montageschrauben die freie Bewegbarkeit beeinflussen könnten.

Alternative Befestigungsmittel zum Befestigen der elektrischen Einheiten werden in vorteilhafter Weise dadurch realisiert, daß der Montagesteg an der Montageseite mit zwei einstückig angeformten hakenartigen Leisten zur Bildung einer Hutschiene oder C-Schiene versehen ist. Die beiden Leisten sind dabei insbesondere symmetrisch zu beiden Seiten der Montagenut angeordnet. Auf diese Weise lassen sich beispielsweise an sich bekannte Hutschienen in einfacher Weise bei der erfindungsgemäßen Vorrichtung realisieren.

An den insbesondere zwei Tragschienen können in vorteilhafter Weise mehrere parallele Montagestege angeordnet werden. Dabei können auch in ihren Dimensionen und/oder Ausführungen der Befestigungsmittel unterschiedliche Montagestege an den beiden Tragschienen in beliebiger Anordnung angebracht werden.

Ein Ausführungsbeispiel der Erfindung ist in der Zeichnung dargestellt und in der nachfolgenden Beschreibung näher erläutert. Es zeigen:
- Fig. 1: eine perspektivische Darstellung einer Gesamtanordnung zweier vertikaler Tragschienen, die mit vier Montagestegen in zwei Ausführungen versehen sind,
- Fig. 2: eine Schnittdarstellung eines an einer Tragschiene angeordneten Montagestegs und
- Fig. 3: eine Schnittdarstellung einer Tragschiene mit zwei nach entgegengesetzten Seiten hin offenen Montagenuten.

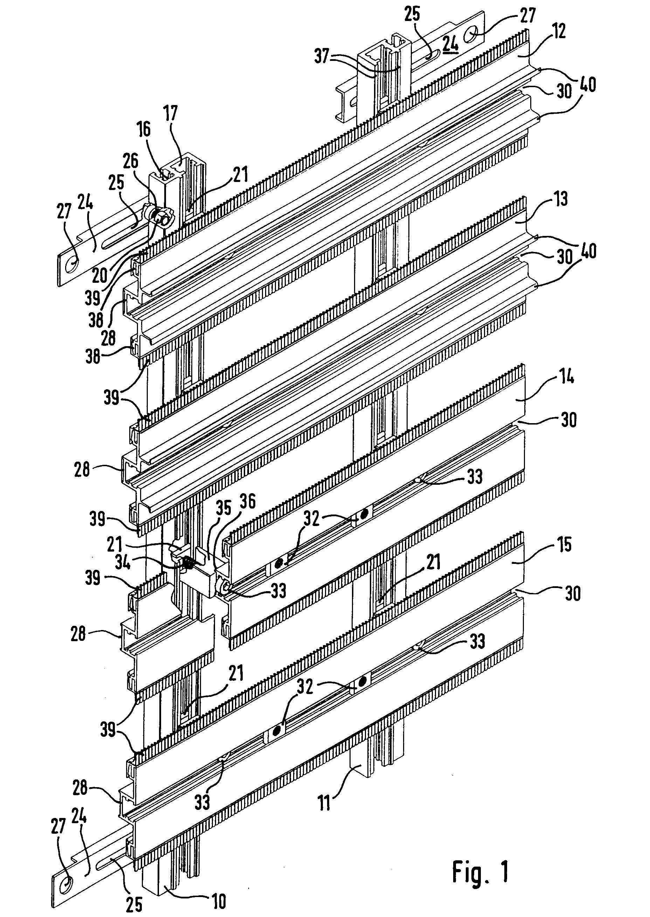

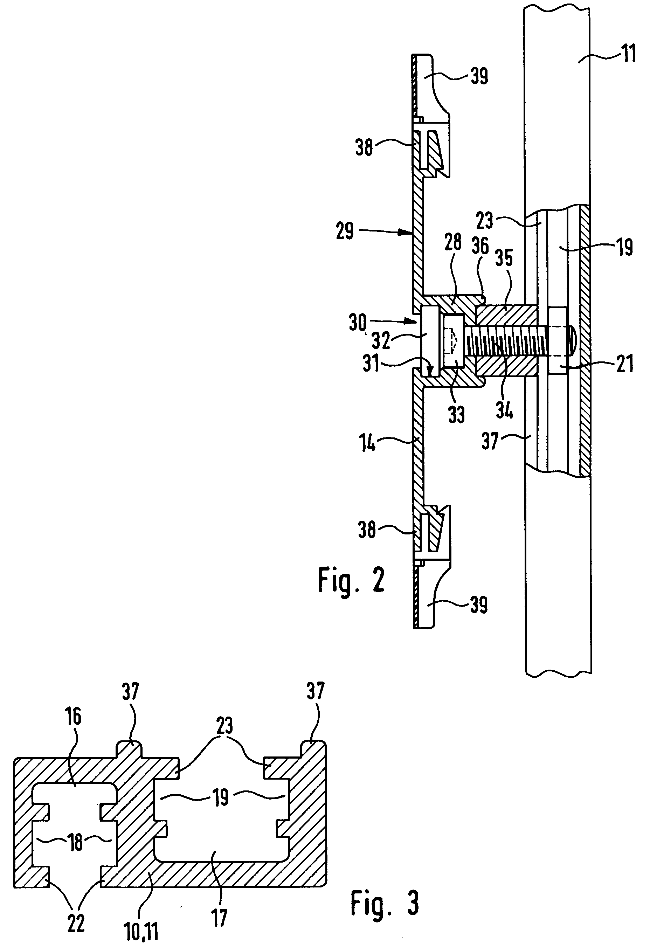

Bei dem in den Fig. 1 und 2 dargestellten Ausführungsbeispiel sind Zwei Tragschienen 10, 11 vertikal montiert, beispielsweise in einem nicht dargestellten Schaltschrank. Senkrecht dazu sind vier horizontale Montagestege 12 - 15 senkrecht zu den Tragschienen 10, 11 an diesen fixiert. Ab einer bestimmten Länge der Montagestege 12 - 15 können noch weitere Tragschienen hinzukommen, wenn die freitragende Länge der Montagestege 12 - 15 zwischen diesen Tragschienen 10, 11 zu groß wird.

Die Tragschienen 10, 11 weisen gemäß Fig. 3 zwei nach entgegengesetzten Seiten offene Montagenuten 16, 17 auf. In diesen Montagenuten 16, 17 sind jeweils Schiebeführungen 18, 19 für Gleitmuttern 20, 21 vorgesehen, die entlang dieser Schiebeführungen 18, 19 in der Längsrichtung verschiebbar geführt sind, jedoch durch die Öffnungen der Montagenuten 16, 17 begrenzende Stege 22, 23 daran gehindert werden, aus den Montagenuten 16, 17 herausgezogen zu werden.

Die kleinere Montagenut 16 dient zur Befestigung der Tragschienen 10, 11 an Halteleisten 24 oder auch an sonstigen Haltevorrichtungen und/oder an der Rückwand eines Schaltschranks. Hierzu besitzen diese Halteleisten 24 jeweils ein Langloch 25, durch das jeweils eine Montageschraube 26 in die Montagenut 16 eingreift und an einer Gleitmutter 20 verankerbar ist. Am entgegengesetzten Ende besitzen die Halteleisten 24 ein Befestigungsloch 27, in das zur Befestigung beispielsweise ein an einem Schaltschrank verankerter, nicht dargestellter Stehbolzen eingreift. Solche Stehbolzen sind üblicherweise an Schaltschränken in den vier Eckbereichen ohnehin angeordnet. Sie können zur Befestigung der Halteleisten 24 in der beschriebenen Weise unter Verwendung von Haltemuttern dienen, wobei die Tragschienen 10, 11 dann in Abhängigkeit der Länge der Langlöcher 25 noch seitlich verschiebbar und positionierbar sind. In die vertikale Richtung können die Tragschienen 10, 11 ohnehin durch die Verschiebbarkeit der Gleitmuttern 20 in den Schiebeführungen 18 positioniert werden.

Es ist selbstverständlich auch möglich, die Tragschienen 10, 11 direkt an der Rückwand eines Schaltschranks zu fixieren. In diesem Falle können sie unter Wegfall der kleineren Montagenuten 16 auch einfacher ausgestaltet werden und beispielsweise lediglich ein U-Profil aufweisen. Zur Befestigung können Löcher in den Boden der Tragschienen 10, 11 gebohrt werden, die zur direkten Befestigung an der Rückwand eines Schaltschranks dienen können. Da die Schiebeführungen 19 von diesem Boden beabstandet angeordnet sind, hindern die Köpfe der so eingesetzten Halteschrauben nicht die Bewegung der Gleitmuttern 21 zur Befestigung der Montagestege 12 - 15.

Die Montagestege 12 - 15 sind im wesentlichen flachleistenartig ausgebildet und besitzen an ihrer den Tragschienen 11, 12 zugewandten Rückseite eine einstückig angeformte Halterippe 28, die sich über die gesamte Länge der Montagestege 12 - 15 erstreckt und die im wesentlichen einen U-förmigen Querschnitt besitzt, so daß an der der Rückseite entgegengesetzten Montageseite 29 der Montagestege 12 - 15 eine Montagenut 30 gebildet wird. Die Halterippen 28 können - wie dargestellt - mittig an den Montagestegen 12 - 15 angeordnet sein, jedoch ist prinzipiell auch eine versetzte Anordnung möglich.

Ähnlich wie die Montagenuten 16, 17 besitzt auch die Montagenut 30 eine Schiebeführung 31 für Gleitmuttern 32, die entsprechend den Gleitmuttern 20, 21 darin geführt sind. Zwischen der Schiebeführung 31 bzw. den Gleitmuttern 32 und dem Boden der Halterippe 28 ist ein Abstand derart vorgesehen, daß Köpfe 33 von Montageschrauben 34 zur Befestigung der Montagestege 12 - 15 an den Tragschienen 10, 11 Aufnahme finden, ohne daß die Bewegung der Gleitmuttern 32 beeinträchtigt wäre. Diese Montageschrauben 34 erstrecken sich durch den Boden der Halterippen 28 und durch Abstandsstücke 35 hindurch bis zu den Schiebeführungen 19 der Tragschienen 10, 11 und sind dort an den Gleitmuttern 21 im montierten Zustand fixiert.

Die Abstandsstücke 35 weisen einen quadratischen Querschnitt auf und greifen zum einen an der Halterippe 28 zwischen zwei seitlichen wulstartigen Erhebungen 36 in Form von abgerundeten Leisten so ein, daß eine Verdrehsicherheit um die Längsachse der Montageschraube 34 erreicht wird. Am gegenüberliegenden Ende greifen die Abstandsstücke 35 entsprechend zwischen zwei ähnlichen wulstartigen Erhebungen 37 an den Tragschienen 10, 11 ein, so daß auch bezüglich der Tragschienen 10, 11 eine Verdrehsicherheit erreicht wird. Hierdurch sind die Montagestege 12 - 15 im fixierten Zustand exakt rechtwinklig an den Tragschienen 10, 11 befestigt und können gegenüber diesen nicht gedreht werden. Dies erleichtert die exakte Montage der gesamten Vorrichtung.

Selbstverständlich könnten entsprechende wulstartige Erhebungen bzw. Vertiefungen auch an den Abstandsstücken 35 vorgesehen sein, so daß ein entsprechender drehfester Eingriff der Halterippen 28 oder Tragschienen 10, 11 erfolgt.

Zur Erleichterung der Montage können die Abstandsstücke 35 in nicht dargestellter Weise auch seitlich so geschlitzt sein, daß sie seitlich auf die Montageschrauben 34 aufgeschoben werden können. Die Länge der Abstandsstücke 35 hängt von der Größe des gewünschten oder erforderlichen Verdrahtungsraums ab, das heißt des Raums zwischen den Montagestegen 12 - 15 und der Rückwandung des Schaltschranks. Hierzu können auch Abstandsstücke 35 in verschiedener Länge vorgesehen sein, die nach Bedarf verwendet werden. Im einfachsten Falle kann auf die Abstandsstücke 35 ganz verzichtet werden, oder sie sind einstückig an der Halterippe 28 angeformt.

Die Montagestege 12 - 15 sind bis auf die angeformten Halterippen 28 als Flachleisten ausgebildet. An den beiden entgegengesetzten Endkanten sind Steckaufnahmen 38 für Verdrahtungskämme 39 einstückig angeformt. Solche Verdrahungskämme sind beispielsweise aus dem eingangs angegebenen Katalog oder aus der DE 43 23 370 bekannt. Sie weisen eine Vielzahl von nebeneinander angeordneten Zähnen auf, zwischen die Kabel und Leitungen eingesteckt und dadurch fixiert werden können. Die Verdrahtungskämme 39 sind beliebig ablängbar und können daher in ihrer Länge der der Montagestege 12 - 15 angepaßt werden. Durch einfaches Aufstecken der Verdrahtungskämme 39 auf die Steckaufnahmen 38 der Montagestege 12 - 15 erfolgt eine Verrastung, die auch wieder gelöst werden kann. Die Zähne der Verdrahtungskämme 39 erstrecken sich dadurch in derselben Ebene wie die der plattenartigen Montagestege 12 - 15.

Selbstverständlich ist es nicht in jedem Falle erforderlich, auf beide Endkanten der Montagestege 12 - 15 Verdrahtungskämme 39 aufzustecken, sondern dies erfolgt nur im Bedarfsfalle.

Die Montagestege 12 - 15 dienen zur Befestigung von elektrischen Einheiten, wie sie beispielsweise in Schaltschränken verwendet werden und dort als Schalt- und Steuermodule in Reihen angeordnet werden. Solche Module weisen häufig genormte Gehäuse in unterschiedlichen Breiten auf und können beispielsweise als Relais-Bausteine, Netzgeräte, Anzeigebausteine, Entstörbausteine, Steuerbausteine, Interface-Bausteine, Ausgabe-/Eingabebausteine, Gleichrichterbausteine, Trennbausteine u.dgl. ausgebildet sein. Zur Befestigung dient beispielsweise eine Vielzahl von Gleitmuttern 32, jedoch sind derartige elektrische Einheiten bzw. Module auch häufig zum Aufstecken auf genormte Hutschienen bzw. C-Schienen ausgebildet. Die beiden oberen in Fig. 1 dargestellten Montagestege 12, 13 sind mit solchen Hutschienen 40 versehen. Sie bestehen aus zwei Leisten mit hakenartigem Querschnitt, wobei sich die Hakenenden nach entgegengesetzten Seiten erstrecken. Diese beiden Leisten sind zu beiden Seiten der Montagenut 30 angeordnet.

Gemäß Fig. 1 sind diese Hutschienen 40 einstückig an den Montagestegen 12, 13 angeformt. Es ist jedoch selbstverständlich auch möglich, fertige Hutschienen als separate Bauteile mittels der Gleitmuttern 32 an den Montagestegen 14, 15 zu fixieren, die keine angeformten Hutschienen 40 besitzen.

Die Montagestege 12 - 15 sowie die Tragschienen 10, 11 sind beliebig ablängbar und dadurch leicht an die Dimensionen beispielsweise eines Schaltschranks anpaßbar. Je nach Art der verwendeten elektrischen Einheiten können unterschiedliche Breiten von Montagestegen 12 - 15 am geeignetsten sein. Die Montagestege 12 - 15 können daher in verschiedenen Breiten zur Verfügung gestellt werden, und auch innerhalb eines Schaltschranks können Montagestege unterschiedlicher Breite montiert werden, zum Teil mit Hutschienen und zum Teil auch ohne, sofern dies geeignet erscheint.

Als Material für die Tragschienen 10, 11 und Montagestege 12 - 15 eignen sich Aluminium oder Aluminiumlegierungen. Selbstverständlich sind auch Ausführungen in Kunststoff möglich. Die Verdrahtungskämme 39 bestehen vorzugsweise aus einem Kunststoffmaterial.

## Patentansprüche

1. Vorrichtung zur Befestigung und Verdrahtung einer Vielzahl von elektrischen Einheiten, insbesondere in einem Schaltschrank, mit wenigstens einem die elektrischen Einheiten an seiner Montageseite aufnehmenden Montagesteg, der an wenigstens zwei senkrecht dazu dahinter angeordneten Tragschienen befestigbar ist, wobei Befestigungsmittel zum Befestigen der elektrischen Einheiten am Montagesteg vorgesehen sind, dadurch gekennzeichnet, daß der flachleistenartige Montagesteg (12-15) an seiner der Montageseite (29) entgegengesetzten Rückseite eine sich über seine Länge erstreckende, einstückig angeformte Halterippe (28) mit einer zur Montageseite (29) hin offenen Montagenut (30) besitzt, daß die Montagenut (30) zur Aufnahme der Köpfe (33) von Montageschrauben (34) zur Befestigung des Montagestegs (12-15) mittels der Halterippe (28) an den Tragschienen (10, 11) ausgebildet ist und daß wenigstens eine der beiden entgegengesetzten Längskanten des flachleistenartigen Montagestegs (12-15) mit einem Verdrahtungskamm (39) versehbar ist.

2. Vorrichtung nach Anspruch 1, dadurch gekennzeichnet, daß die Halterippe (28) im wesentlichen mittig angeordnet ist und/oder einen im wesentlichen U-förmigen Querschnitt besitzt.

3. Vorrichtung nach einem der vorhergehenden Ansprüche, dadurch gekennzeichnet, daß beide Längskanten des Montagestegs (12-15) zum Aufstecken oder Aufrasten jeweils eines Verdrahtungskamms (39) und insbesondere als Steck- oder Rastaufnahmen (38) für Verdrahtungskämme ausgebildet sind.

4. Vorrichtung nach einem der vorhergehenden Ansprüche, dadurch gekennzeichnet, daß Abstandsstücke (35) zwischen der Halterippe (28) und den Tragschienen (10,11) vorgesehen sind, die Ausnehmungen für die Montageschrauben (34) besitzen.

5. Vorrichtung nach Anspruch 4, dadurch gekennzeichnet, daß die Abstandsstücke (35) einen im wesentlichen rechteckigen, insbesondere quadratischen Querschnitt besitzen und sowohl mittels einer nutartigen Vertiefung auf seiten der Halterippe (28) als auch mittels einer nutartigen Vertiefung auf seiten der Tragschienen (10,11) drehfest montierbar sind, wobei die nutartigen Vertiefungen vorzugsweise jeweils zwischen zwei wulstartigen, sich in der Längsrichtung erstreckenden Erhebungen (36, 37) gebildet werden.

6. Vorrichtung nach einem der vorhergehenden Ansprüche, dadurch gekennzeichnet, daß die Tragschienen (10, 11) wenigstens eine zur Halterippe (28) hin offene Montagenut (17) besitzen, in der mit den Montageschrauben (34) zusammenwirkende Gleitmuttern (21) längsverschiebbar geführt sind.

7. Vorrichtung nach Anspruch 9, dadurch gekennzeichnet, daß die Tragschienen (10, 11) eine weitere, zur entgegengesetzten Seite hin offene Montagenut (16) besitzen, in der mit weiteren Montageschrauben (26) zur Befestigung der Tragschienen (10, 11) an einer Schankwand oder an Haltevorrichtungen (24) zusammenwirkende Gleitmuttern (20) längsverschiebbar geführt sind.

8. Vorrichtung nach Anspruch 7, dadurch gekennzeichnet, daß mit Stehbolzen eines Schaltschranks verbindbare, als Haltevorrichtungen (24) ausgebildete Halteleisten vorgesehen sind, die Langlöcher (25) zur Verbindung mit den Tragschienen (10, 11) besitzen.

9. Vorrichtung nach einem der vorhergehenden Ansprüche, dadurch gekennzeichnet, daß in der Montagenut (30) der Halterippe (28) Gleitmuttern (32) in Führungen (31) längsverschiebbar geführt sind, die so beabstandet vom Boden der Montagenut (30) angeordnet sind, daß die Köpfe (33) der Montageschrauben (34) außerhalb der Bewegungsbahn der Gleitmuttern (32) angeordnet sind.

10. Vorrichtung nach einem der vorhergehenden Ansprüche, dadurch gekennzeichnet, daß der Montagesteg (12-15) an der Montageseite (29) mit zwei einstückig angeformten, insbesondere symmetrisch zu beiden Seiten der Montagenut (30) angeordneten, hakenartigen Leisten zur Bildung einer Hutschiene (40) oder C-Schiene versehen ist.

11. Vorrichtung nach einem der vorhergehenden Ansprüche, dadurch gekennzeichnet, daß mehrere parallele in ihren Dimensionen und/oder Ausführungen der Befestigungsmittel vorzugsweise unterschiedliche Montagestege (12-15) an den wenigstens zwei Tragschienen (10, 11) angeordnet sind.
